# EUROPÄISCHE PATENTANMELDUNG

(11) **EP 2 469 208 A2**
(43) Veröffentlichungstag der Anmeldung: **27.06.2012**
(21) Anmeldenummer: 12160171.0
(22) Anmeldetag: 22.12.2005
(51) Int. Cl.: F28D 1/047, F28D 7/08, F28F 1/22, B21D 53/08, F24F 12/00, F25B 1/00, F25B 9/00, F24D 3/18

(54) **Wärmeübertrager und Wärmepumpenkreis**

(30) Priorität: 22.12.2004 DE 102004061673; 18.01.2005 DE 102005002282
(62) Teilanmeldung aus: 05820443.9
(71) Anmelder: Stiebel Eltron GmbH & Co. KG, 37603 Holzminden (DE)
(72) Erfinder: Schiefelbein, Kai, 37671 Höxter (DE); Smollich, Steffen, 37671 Höxter (DE); Schaumlöffel, Michael, 37671 Höxter (DE); Nolte, Hubert, 37671 Höxter (DE)
(74) Vertreter: Gültzow, Marc

(57) **Zusammenfassung**

Die vorliegende Erfindung betrifft einen Wärmeübertrager mit einem Leitungssystem für ein Kältemittel und einem Leitungssystem für ein Fluid, die zur Übertragung von Wärmeenergie von einem Medium auf das andere miteinander thermisch gekoppelt sind. Dabei weist der Wärmeübertrager eine Vielzahl von Teilstrecken auf, die hydraulisch jeweils miteinander parallel und/oder seriell verbunden sind.

Um einen Wärmeübertrager der vorstehend genannten Art mit verbessertem Wärmeübergang in einer kompakteren Bauart und ein rationelles Herstellungsverfahren für einen derartigen Wärmeübertrager zu schaffen, wird vorgeschlagen, dass in einer Teilstrecke jeweils ein Fluidkanal ein Blech mit ungefähr U-, V- oder W-förmigem Querschnittsverlauf umfasst, das an den Enden der U-, V- oder W-Form durch ein Blech geschlossen ist, wobei das Kältemittel in einem Rohr parallel zur Längsachse des Fluidkanals in dem Fluidkanal angeordnet ist.

## Beschreibung

Die vorliegende Erfindung betrifft einen Wärmeübertrager mit einem Leitungssystem für ein Kältemittel und einem Leitungssystem für ein Fluid sowie einen Wärmepumpenkreis einer Lüftungsanlage mit einem im Hochdruckbereich überkritischen Kältemittel, der einen Wärmeübertrager aufweist.

Wärmeübertrager der genannten Art sind aus dem Stand der Technik in großer Zahl bekannt welche zur Übertragung von Wärmeenergie von einem Medium auf das andere miteinander gekoppelt sind. Typischerweise weist der Wärmeübertrager eine Vielzahl von Teilstrecken auf, welche hydraulisch jeweils miteinander parallel oder seriell verbunden sind. Zur Minimierung des Raumbedarfs weist der Wärmeübertrager i.d.R. eine Vielzahl von Teilstrecken auf, die unter Betrachtung jeweils eines Leitungssystems hydraulisch miteinander parallel und/oder seriell verbunden sind.

Derartige Wärmeübertrager werden beispielsweise in einem Wärmepumpenkreis einer Lüftungsanlage implementiert, welche ein Kältemittel aufweist, das im Hochdruckbereich überkritisch ist. Ein derartiger Wärmeübertrager nimmt Wärme von einem Außenluftstrom oder von einer Fortluft auf und überträgt dieses auf das Kältemittel.

Derartige Lüftungsanlagen sind beispielsweise aus der DE 197 02 903 A1, DE 199 13 861 C1 oder der DE 101 03 150 A1 bekannt. In besonders vorteilhafter Weise ist gemäß der Lehre der letztgenannten DE 101 03 51 A1 auch die zusätzliche Nutzung der aus dem ersten Wärmeübertrager austretenden Fortluft durch eine Abwärmepumpe vorgesehen. Der Nutzung von Abwärme aus Abluft und/oder Abwasser kommt seit dem Inkrafttreten der Energieeinsparverordnung EnEV im Februar 2002 besondere Bedeutung zu. Eine auf der Nutzung von Abwärme aufbauende Heizungsanlage senkt deren Primärenergiebedarf für Trinkwassererwärmung, Lüftung und Heizung sehr deutlich. So kann die eingesetzte Anlagentechnik sogar Einfluss auf die Erteilung oder Nicht-Erteilung einer Baugenehmigung Auswirkung haben.

Es ist daher die Aufgabe der vorliegenden Erfindung, einen Wärmeübertrager der vorstehend genannten Art mit verbessertem Wärmeübergang in einer kompakteren Bauart und ein rationelles Herstellungsverfahren für einen derartigen Wärmeübertrager zu schaffen. Es ist ferner Aufgabe der vorliegenden Erfindung, eine thermodynamische Verbesserung des Wärmepumpen-Kreisprozesses mit einem Wärmeübertrager zu erreichen.

Diese Aufgabe wird durch die Merkmale von Anspruch 1 gelöst, indem in einer Teilstrecke des Wärmeübertragers jeweils ein Fluidkanal ein Blech mit ungefähr U-, V- oder W-förmigem Querschnittsverlauf umfasst, das an den Enden der U-, V- oder W-Form durch ein Blech geschlossen ist, wobei das Kältemittel in einem Rohr parallel zur Längsachse des Fluidkanals in dem Fluidkanal angeordnet ist. Damit wird eine Struktur vorgeschlagen, bei der ein Rohr als Teil eines Kältemittelleitungssystems von einem Fluid direkt umschlossen ist. Zur Wärmeübertragung ist damit zwischen dem Kältemittel und dem Fluid nur die Wandung des Rohres als einzige Trennung zu überwinden. Hierdurch wird der Wärmeübergang gegenüber anderen bekannten Wärmeübertragern verbessert. Die Form des Fluidkanals verleiht dabei bereits einem Teilkanal hohe mechanische Stabilität. Zugleich erlaubt die gewählte Form des Fluidkanals durch die Schachtelung der Bestandteile beider Leitungssysteme bei vereinfachter Fertigung auch die Ausbildung einer kompakten Bauart des gesamten, aus miteinander hydraulisch verschalteten Teilkanälen aufgebauten Wärmeübertragers.

Vorteilhafte Weiterbildungen der Erfindung sind Gegenstand der Unteransprüche. Demnach entspricht das Verhältnis der Querschnittsflächen des Fluidkanals und des Rohres dem Verhältnis der jeweiligen k-Faktoren des Kältemittels und des Fluids. Auch diese konstruktive Maßnahme dient durch einen Ausgleich der von einem Medium abzugebenen an die von dem anderen Medium aufzunehmende Wärmemenge einer Optimierung der gesamten Wärmeübertragung. Bei Verwendung von R407c als Kältemittel-Mischung aus verschiedenen Bestandteilen wird ein Flächenverhältnis von ca. 2 : 1 eingestellt. Bei Einsatz von Propan als Kältemittel ist ein Flächenverhältnis von ca. 4 : 1 bis 5 : 1 einzusteilen. In einer Ausführungsform der Erfindung ist ein Flächenverhältnis von 3 : 1 eingestellt.

In einer Ausführungsform der Erfindung stehen die Schenkel des ungefähr U-, V- oder W-förmigen Blechs zueinander in einem Winkel α, über den das vorstehend genannte Flächenverhältnis bei sonst gleichbleibender Geometrie in einem weiten Bereich einstellbar ist. Bevorzug wird ein Winkel α von ca. 55 bis etwa 140° zwischen den Schenkeln des ungefähr U-, V- oder W-förmigen Blechs des Fluidkanals. Bevorzugt wird jedoch ein Winkel α von ca. 67° zwischen den Schenkeln des ungefähr U-, V- oder W-förmigen Blechs des Fluidkanals eingestellt.

Vorzugsweise ist das Rohr zwischen den Schenkeln des ungefähr U-, V- oder W-förmigen Blechs fixiert. Insbesondere ist das Rohr an dem U-, V- oder W-förmigen Blech dadurch fixiert, dass es angedrückt, angelötet, angeschweißt und/oder angelasert ist. Die Fixierung erhöht die Stabilität der Anordnung zusätzlich, während sich aus dem Kontakt des Rohres mit dem ungefähr U-, V- oder W-förmigen Blech auch eine zusätzliche Möglichkeit zur Wärmeübertragung durch Wärmeleitung ergibt, also quasi eine wesentliche Vergrößerung der Oberfläche des Rohres bewirkt wird. In einer alternativen Ausführungsform ist das Rohr dagegen ungefähr im Schwerpunkt der durch die Schenkel des ungefähr U-, V- oder W-förmigen Blechs aufgespannten Fläche angeordnet. Damit wird das Rohr über seinen gesamten Umfang frei von dem Fluid des Fluidkanals umströmt, was bei guter Flächenausnutzung ebenfalls eine gute Wärmeübertragung durch erzwungene Konvektion gewährleistet. Mindestens in dieser Ausbildungsform der Erfindung sind dem Fachmann diverse Maßnahmen zur Vergrößerung der Außenfläche des Rohrs bekannt, wie z.B. Anklemmen von Blechen oder Fixieren von im Wesentlichen längs zur Strömungsrichtung ausgerichteten Rippen.

In einer Ausführungsform der Erfindung ist eine Teilstrecke aus drei Elementen aufgebaut, wobei das Rohr in dem ungefähr U-, V- oder W-förmigen Blech liegt und das ungefähr U-, V- oder W-förmige Blech auf einem Trägerblech angeordnet ist. Das Trägerblech weist dabei in einem Ausführungsbeispiel der Erfindung im Wesentlichen die gleiche Flächenausdehnung wie das U-, V- oder W-förmige Blech auf.

Das U-, V- oder W-förmige Blech grenzt vorteilhafterweise senkrecht zu seiner Längsachse an im Bereich eines Schenkels an ein weiteres U-, V- oder W-förmiges Blech an, so dass sich insbesondere im Fall einer Mehrzahl von U-, V- oder W-förmigen Blechen insgesamt eine Art von Wellblech ergibt. Diese Struktur wird von dem Fluid mäandernd durchflossen oder ist von dem Fluid mäandernd durchfließbar.

Vorteilhafterweise ist ein Rohr an mindestens einem Ende mit einem gleichartigen Rohr verbunden. So ergibt sich in einer Ausführungsform der Erfindung eine platzsparende, von dem Kältemittel mäandernd durchfließbare Anordnung. Diese Anordnung kann auch als ein mäandernd gebogenes einziges Rohr mit geradlinig verlaufenden Teilabschnitten ausgebildet sein.

In einer Ausführungsform der Erfindung ist in dem Wärmeübertrager eine Anordnung aus Rohr, U-, V- oder W-förmigem Blech und Trägerblech als Schicht zusammengefasst. Eine derartige Schicht ist über einer anderen Schicht mit gleichartigen Bauteilen so angeordnet, dass das Trägerblech der ersten Schicht das abdeckende Blech der zweiten Schicht bildet. Damit ist ein erfindungsgemäßer Wärmeübertrager in hervorragender Weise mit einfachen Mitteln skalierbar und einem jeweiligen Bedarf oder einer Dimensionierung eines Wärmeübertragers anpassbar.

In einer Weiterbildung der Erfindung weisen das U-, V- oder W-förmigem Blech in dem Bereich, in dem es mit dem Rohr in oberflächlichem Kontakt, und das Trägerblech in dem Bereich, in dem es mit dem U-, V- oder W-förmigen Blech in oberflächlichem Kontakt steht, Ausnehmungen zur Ermöglichung einer gemeinsamen Verlötung auf. Es wird also ein Stapel von vorstehend genannten Elementen gebildet, die gemeinsam in einem Prozessschritt miteinander verbunden werden. Dabei kommt nach einer Ausführungsform der Erfindung ein Herstellungsverfahren zum Einsatz, bei dem ein Lötprozess in einem Vakuum-Ofen abläuft, um die genannten Elemente in einem einzigen Lötprozess alle miteinander sicher zu verlöten.

Die Ausnehmungen sind als Schlitze und/oder Lochungen mit Abmessungen ausgebildet, die im Zuge der gemeinsamen Verlötung im Wesentlichen geschlossen werden. Es ergibt sich mithin in einer bevorzugten Ausführungsform der Erfindung ein Fertigungsverfahren, wonach ein Rohr jeweils in ein Tal eines U-, V- oder W-förmigen Blechs eingelegt und das U-, V- oder W-förmige Blech auf ein Trägerblech gelegt wird, wobei das U-, V- oder W-förmige Blech mit Ausnehmungen im Kontaktbereich mit dem Rohr und das Trägerblech mit Ausnehmungen im Kontaktbereich mit dem U-, V- oder W-förmigen Blech versehen wird, Lötzinn jeweils in ein Tal eines U-, V- oder W-förmigen Blechs eingelegt und die genannten Elemente ohne weitere vorangehende Vor-Fixierung miteinander verlötet werden. Das Verfahren umfasst damit nur noch die Schritte eines Zusammenlegens bzw. Übereinanderstapelns und einer Vakuumverlötung, um eine vollständig verbundene Anordnung zu erhalten. Der Anteil von Handarbeit ist damit auf ein Minimum gesenkt worden, wie auch die Anzahl der in Einsatz zu bringenden unterschiedlichen Materialien und/oder Hilfsstoffe.

Die Ausnehmungen in dem U-, V- oder W-förmige Blech und dem Trägerblech werden in einer Ausführungsform als Perforation, Lochung und/oder abschnittsweise Schlitzung hergestellt. Dabei werden die Ausnehmungen in dem U-, V- oder W-förmige Blech und dem Trägerblech vorzugsweise durch Stanzen, Bohren und/oder Lasern hergestellt. Vorzugsweise sind die Ausnehmungen als Schlitze und/oder Lochungen mit Abmessungen derart ausgebildet, dass sie im Zuge der gemeinsamen Verlötung im Wesentlichen geschlossen werden. So sind dann die einzelnen Schichten innerhalb des Wärmeübertragers gegeneinander fluiddicht ausgebildet.

Vorzugsweise wird das U-, V- oder W-förmige Blech mit periodischer Fortsetzung senkrecht zu einer späteren Strömungsrichtung durch abschnittsweises Pressen und/oder Tiefziehen eines Blechs hergestellt. Durch dieses Herstellungsverfahren wird ein Grad an Maßhaltigkeit erreicht, der ausreichend ist, um in einer Anordnung von Einzelteilen vor und während des Verlötens stets ein Tal eines oberen U-, V- oder W-förmigen Blechs mit einem Berg eines unteren U-, V- oder W-förmigen Blechs relativ zueinander in übereinstimmende Position zu bringen. Dieses für die vorstehend dargestellte Lötverbindung erforderliche Anordnungsprinzip kann bei ausreichender Maßhaltigkeit der U-, V- oder W-förmigen Bleche für große Einheiten garantieren, dass sogar mehrschichtige Anordnungen in nur einem Lötschritt fertig verbunden und auch in ausreichender Weise abgedichtet werden können. Ein derartiges Verfahren ist dann sehr effizient und ökonomisch.

Ein erfindungsgemäßer Wärmeübertrager ist vorzugsweise als Gegenstrom-Wärmeübertrager ausgebildet, wobei insbesondere als Kältemittel im überkritischen Bereich betriebenes Kohlendioxid gewählt ist. Zur Gewährleistung der kältemittelseitigen Druckfestigkeit eignen sich die erfindungsgemäß vorgesehenen Rohrleitungen besonders. In Form dünner Rohre bzw. Rohr mit geringer Querschnittsfläche sind Rohre mit starken Drücken belastbar, so dass insbesondere Berst-Druck-Tests von einem Wärmeübertrager der genannten erfindungsgemäßen Bauart prinzipiell gut bestanden werden. Bevorzugter Weise wird als Fluid Wasser gewählt, was schon auf Wärmepumpen und Hausklimaanlagen als einen wesentlichen Einsatzbereich erfindungsgemäßer Wärmeübertrager hinweist. Das Rohr, das U-, V- oder W-förmige Blech, das Trägerblech und ein fluiddichtes Außengehäuse bestehen in Ausführungsformen der Erfindung aus Kupfer oder Edelstahl.

Die vorliegende Aufgabe wird ferner durch die Merkmale des Anspruchs 24 gelöst. Somit ist in dem Wärmepumpenkreis ein Wärmeübertrager oder ein Wärmeübertrager und ein zweiter Wärmeübertrager für die Überhitzung des zumindest teilweise verdampften Kältemittels vorgesehen, wobei der Wärmeübertrager, der wenigstens von Außenluft durchströmt ist, in Strömungsrichtung des Kältemittels bei Heizbetrieb vor dem zweiten Wärmeübertrager liegt, in dem von der Fortluft der Lüftungsanlage Wärme auf das Kältemittel übertragen wird und/oder dass zusätzlich zu einem Wärmeübertrager ein Wärmeübertrager als Gaskühler im Außenluftstrom vor der Lüftungsanlage angeordnet ist, bei dem Wärme vom in einem Hochdruckbereich überkritischen Kältemittel auf den Außenluftstrom übertragen wird.

Die vorstehend genannte Lösung umfasst mithin die drei Alternativen einer zweistufigen Unterkühlung des Kältemittels, einer zweistufigen Überhitzung des Kältemittels sowie einer Kombination aus zweistufiger Unterkühlung und zweistufiger Überhitzung desselben Kältemittels. Im Fall einer zweistufigen Unterkühlung des Kältemittels wird das Ziel einer thermodynamischen Verbesserung des Kreisprozesses des Wärmelüftungskreises dadurch erreicht, dass einem ersten Wärmeübertrager als Gaskühler ein zweiter Wärmeübertrager nachgeschaltet wird. Dieser zweite Wärmeübertrager dient dazu, die verbleibende Wärme des überkritischen Kältemittels beispielsweise auf die Außenluft zu übertragen, so dass diese Außenluft nunmehr Temperaturen von 0°C oder mehr erreicht. Zum weiteren Erwärmen der Zuluft kann damit insbesondere ein Einfrieren eines Luft-Luftwärmeübertragers, der in vorteilhafter Weise als Kreuz-Gegenstrom-Luft-Luft-Wärmeübertrager ausgebildet ist, vermieden werden. Daneben bewirkt der zweite Wärmeübertrager jedoch vorteilhafterweise gleichzeitig auch eine signifikante Verringerung der Wärmeübertrager-Austrittstemperatur des Kältemittels. Dies führt bei Wärmepumpen-oder Kältekreisen zu einer deutlichen Erhöhung der als Quotient aus Heizleistung und Verdichter-Antriebsleistung definierten Leistungszahl *ε*, weil sich die nutzbare Wärme- bzw. Kälteleistung erhöht, ohne dass dazu zusätzliche elektrische Verdichterleistung aufgewendet werden muss.

Bei der Alternative einer zweistufigen Überhitzung wird ein wesentlicher Nachteil einer Überhitzung in einem einstufigen Kältemittelverdampfer vermieden, wonach die Wärmequelle an sich ein recht niedriges Temperaturniveau haben kann und bei einem sehr effizient arbeitenden Verdampfer unter Umständen keine zuverlässige Überhitzung realisiert werden kann. Erfindungsgemäß beinhaltet ein Wärmpumpenkreislauf an einem Verdampfer des Kältemittels anschließend einen weiteren Wärmeübertrager, in dem das Kältemittel zum Schutz des Verdichters sicher überhitzt bzw. nachverdampft wird, wobei das Kältemittel im Hochdruckbereich des Wärmepumpenkreislaufs in einem überkritischen Bereich und der Wärmepumpenkreislauf mit gesteigerte Effizient betrieben wird.

Bei der dritten Alternative werden die beiden vorstehend genannten Alternativen miteinander kombiniert, so dass sich eine zweistufige Überhitzung und eine zweistufige Unterkühlung des Kältemittels in demselben Wärmepumpenkreislauf ergibt. Die vorstehend aufgeführten Vorteile addieren sich hierbei bei thermodynamischer Effizienzsteigerung des Kältemittelkreises sowie bei einer Erhöhung der Sicherheit des Betriebes, die sich insbesondere durch eine längere Lebensdauer des Verdichters auszeichnet.

Vorteilhafte Weiterbildungen der Erfindung sind Gegenstand der Unteransprüche. Demnach ist bei jeder der vorstehend genannten drei Alternativen ein Betrieb des jeweiligen zweiten Wärmeübertragers gegen die Außenluft vorgesehen. Im Fall einer Unterkühlung des Kältemittels ist der zweite Wärmeübertrager vorzugsweise dem Außenluft-Eingang als Luft-Luft-Wärmeübertrager ausgebildeten Wärmeübertragers vorgeschaltet. Damit wird die Außenluft durch die von dem zweiten Wärmeübertrager abgegebene Wärme vorerwärmt, während gleichzeitig das Kältemittel des Wärmeübertragerkreises weiter abgekühlt wird. Dies ist für den Wärmepumpenbetrieb günstig, weil dadurch die Verflüssigung des Kältemittels unterstützt wird.

In einer vorteilhaften Ausführungsform der Erfindung ist der zweite Wärmeübertrager im Fall einer Überhitzung des Kältemittels dem für die Erhitzung vorgesehenen Wärmeübertrager in Kältemittel-Flussrichtung vorgeschaltet angeordnet. Der zweite Wärmeübertrager ist mit Außenluft beaufschlagt, während der eigentlich für die Überhitzung vorgesehene Wärmeübertrager mit Fortluft beaufschlagt wird. Die Temperatur der Fortluft ist größer als die der Außenluft. Aufgrund der im Vergleich zur Außenluft höheren Feuchte der Fortluft ist in Verbindung mit ihrer höheren Temperatur der Energieinhalt der Fortluft auch größer als der der Außenluft. Zudem ist wegen des vergleichbar kleineren Volumenstromes der Fortluft und wegen der hohen verfügbaren externen Pressung von mechanischen Wohnungslüftungsanlagen eine sehr kompakte Gestaltung des Wärmeübertragers für die Überhitzung oder Nachverdampfung des Kältemittels möglich.

In einer vorteilhaften Weiterbildung der Erfindung ist eine mechanische Lüftungsanlage an den Abluft-Eingang eines Wärmeübertragers gekoppelt. Gerade bei den gemäß der Energieeinsparverordnung EnEV geforderten hoch wärmegedämmten und quasi luftdichten Neubauten mit einer geforderten Gebäudedichtigkeit von einem 0,2-fachen freien Luftwechsel über Gebäudeundichtigkeiten bietet sich insbesondere der Einsatz einer mechanischen Lüftungsanlage in Kombination mit einer Abluftwärmepumpe an. Für eine ausreichende Raumluftqualität sowie die notwendige Abfuhr von Feuchte aus den Räumen ist ein etwa 0,5-facher Luftwechsel benötigt, also ein 0,5-maliger Austausch des in den Räumen enthaltenen Luftvolumens pro Stunde, wie er auch nach DIN 1946 für Wohnungen gefordert ist. Zur Erreichung des erforderlichen Luftwechsels ist die derzeit noch übliche Fensterlüftung in Neubauten nach dem durch die EnEV definierten Niedrigenergiehaus-Standard ungeeignet. Als einige wesentliche Nachteile der Fensterlüftung sind zu nennen, dass der Luftwechsel in Abhängigkeit von der Windstärke wesentlich variiert und in der Größe schwer einzuschätzen ist, wobei die Durchströmungsrichtung innerhalb der Wohnung auch häufig ungünstig ist. Die theoretisch sinnvolle Stoßlüftung ist mindestens nachts nicht praktikabel, da mindestens zur Schlafenszeit die Fenster nicht alle zwei Stunden für 10 Minuten geöffnet werden können. Somit wird derzeit im Endeffekt entweder deutlich zu wenig oder viel zu viel gelüftet.

Im Zuge der EnEV wird also fast zwangsläufig ein mechanisches Lüftungssystem in entsprechenden Neubauten vorzusehen sein, durch die vorteilhafter Weise die hier erforderlichen Luftwechsel zuverlässig und sicher eingestellt werden können, wobei eine effiziente Querlüftung unter Verhinderung eines Eindringens von Staub, Pollen und Insekten in die Wohnung durch entsprechende Filterungen gewährleistet werden kann. Zudem wird durch eine mechanische Lüftungsanlage eine Schalldämmung der Wohnung gegenüber der Außenwelt wesentlich verbessert.

In einer besonders bevorzugten Ausführungsform der Erfindung bildet R744 bzw. CO2 das Kältemittel. Gegenüber Fluor-Chlor-Kohlenwasserstoffen (FCKW) und Ersatzstoffen oder einer Verwendung von Propan als Kältemittel zeichnet sich CO2 durch seine gute Verfügbarkeit bei vergleichsweise geringeren Preisen und seine Umweltverträglichkeit aus. Nachteilig bei Verwendung von Kohlendioxid als Kältemittel ist jedoch, dass Kohlendioxid keine klaren Phasenübergänge zeigt. Daher ist es gerade bei der Verwendung von Kohlendioxid als Kältemittel vorteilhaft, den Wärmepumpenprozess erfindungsgemäß klar in einem überkritischen Bereich zu führen. Dementsprechend ist im Fall einer überkritischen Prozessführung des Kältemittels im Hochdruckbereich der vorgesehene Wärmeübertrager für eine Verdampfung und eine teilweise Überhitzung des Kältemittels ausgelegt. Vorzugsweise wird im diesem Fall der jeweils zweite Wärmeübertrager für eine Verdampfung und eine sichere Überhitzung des Kältemittels ausgelegt.

In einer vorteilhaften Ausführungsform eines erfindungsgemäßen Verfahrens zum Betreiben eines Wärmepumpenkreises einer Lüftungsanlage mit einem im Hochdruckbereich des Wärmepumpenkreises im überkritischen Zustand betriebenen Kältemittel, wird das Kältemittel zwischen einer Gaskühlung und einer Wärmeaufnahme einer Druckdifferenz zwischen ca. 40 und ca. 90 bar ausgesetzt. Bei Hochdruck von über 70 bar im überkritischen Zustand fällt getrennt hintereinander zunächst in einer ersten Gaskühlung (2a -2b) die Enthalpie um ca. 150 bis ca. 300 kJ/kg und in einer zweiten, auf die erste nachfolgende, Gaskühlung (3a-3b) fällt die Enthalpie um weniger als ca. 100 kJ/kg, und/oder bei einem Druck zwischen ca. 20 und ca. 60 bar bei einer ersten Wärmeaufnahme (5a-5b) steigt die Enthalpie um ca. 150 bis ca. 250 kJ/kg an und in einer nachfolgenden zweiten Wärmeaufnahme (6a-6b) steigt die Enthalpie des Kältemittels um weniger als ca. 100 kJ/Kg an.

Vorteilhaft ist weiterhin, dass die erste Enthalpiesteigerung durch Wärmeaufnahme (5a-5b) aus der Außenluft erfolgt und die zweite Enthalpiesteigerung durch Wärmeaufnahme (6a-6b) einer Fortluft eines Raumes, die eine höhere Temperatur als die Außenluft besitzt und/oder dass das erste Fallen der Enthalpie durch Wärmeabgabe (2a-2b) von Wärme an ein Heizungs-, Warmwasser- oder Lüftungssystem erfolgt und das zweite Fallen der Enthalpie durch Wärmeabgabe (3a-3b) an einen Außenluftstrom erfolgt.

Das Kältemittel wird in einer vorteilhaften Verfahrens- oder Prozessführung mittels eines Verdichters auf eine Druck von ca. 90 - 100 bar, bei einer Temperatur von ca 80 °C verdichtet. Von diesem Zustand aus erfolgt eine Wärmeabgabe, wobei die Enthalpie des Kältemittels von ca. 470 kJ/kg auf etwa 250 kJ/kg fällt, was isobar bei einem Druck von ca. 95 bar erfolgt. In einem zweiten Wärmeabgabeprozess erfolgt dann beim gleichen Druck ein weiterer Enthalpieabfall von etwa 250 kJ/kg auf 200 kJ/kg. Das Kältemittel wird dann auf einen Druck von ca. 35 bar entspannt, zumindest soweit entspannt, dass das Kältemittel im Nassdampfgebiet gehalten wird. Nun folgt eine in vorteilhafter Weise isobare zweistufige Erwärmung mit einem ersten Anstieg der Enthalpie von ca. 200 kJ/kg auf etwa 400 kJ/kg, insbesondere über 400 kJ/kg, jedoch in vorteilhafter Weise noch im Nassdampfgebiet. Hierauf folgt beim gleichen Druck eine weitere isobare Energieaufnahme, bei der das Kältemittel eine Enthalpie annimmt, die einem Wert außerhalb des Nassdampfgebietes entspricht, im speziellen eine Enthalpie von ca. 440 kJ/kg. Bei höheren Drücken kann die Enthalpie auch etwas kleiner sein, z.B. ca. 420 kJ/kg bei 50 bar, je nachdem bei welchem Druck die Wärmeaufnahme erfolgt. Von diesem Zustand aus erfolgt wieder eine Drucksteigerung im Verdichter auf ca. 95 bar und einer Temperatur von etwa 80 °C, was einer Enthalpie im Bereich um 470 kJ/kg entspricht und womit der Kältemittelprozess geschlossen ist.

Weitere vorteilhafte Ausgestaltungen werden nachfolgend anhand von Ausführungsbeispielen der Erfindung unter Bezugnahme auf Abbildungen der Zeichnung näher beschrieben. Es zeigen:
- Figur 1:: eine perspektivische Ansicht eines geöffneten Wärmeübertragers;
- Figur 2:: eine Seitenansicht des Wärmeübertragers von Figur 1 in einem Ausschnitt;
- Figur 3:: eine skizzierte Schnittdarstellung durch einen Wärmeübertrager gemäß einer der vorhergehenden Figuren;
- Figur 4:: ein schematisches Schaltbild einer Ausführungsform der Erfindung;
- Figur 5:: ein zu dem Wärmepumpenkreis von Figur 4 gehöriges Druck-Enthalpie-Diagramm;
- Figur 6:: ein schematisches Schaltbild einer Ausführungsform der Erfindung;
- Figur 7:: ein zu dem Wärmepumpenkreis gemäß Figur 6 gehöriges Druck-Enthalpie-Diagramm;
- Figur 8:: ein schematisches Schaltbild einer Ausführungsform der Erfindung und
- Figur 9:: ein Druck-Enthalpie-Diagramm, das zu dem Wärmepumpenkreis von Figur 8 gehört.

In den Abbildungen der Zeichnung werden über die verschiedenen Ausführungsformen hinweg gleiche Bezugzeichen für gleiche oder gleichartige Elemente verwendet.

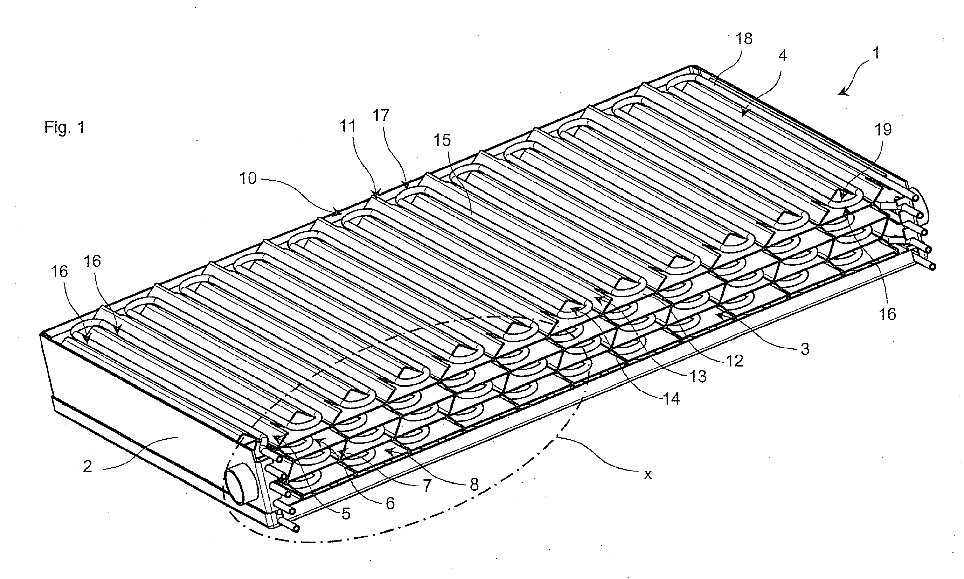

In der Abbildung von Figur 1 ist eine perspektivische Ansicht eines geöffneten Wärmeübertragers 1 gemäß vorliegender Erfindung dargestellt, wobei ein fluiddichtes Außengehäuse 2 im Bereich einer Schmalseite 3 und einer Breitseitenfläche 4 geöffnet ist. Durch die Öffnung des fluiddichten Außengehäuses 2 sind übereinander angeordnete, gleichartig aufgebaute Schichten 5, 6, 7, 8 sichtbar. Herzstück einer jeden der Schichten 5, 6, 7, 8 ist ein wellenförmig gebogenes Blech 9 aus Kupfer mit einer periodischen Abfolge von Wellentälern 10 und Wellenbergen 11, die zueinander punktsymmetrisch sind. Unter jeder Schicht 5, 6, 7, 8 ist ein im Wesentlichen ebenes Blech 12 angeordnet, das die gleichen Außenabmessungen wie das Blech 9 aufweist und den Raum unter den Wellenbergen 11 des Blechs 9 derart abschließt, dass sich ein geschlossener Fluidkanal 13 bildet. Während die in der Darstellung von Figur 1 abgenommene Breitseitenfläche 4 des fluiddichten Außengehäuses 2 das Blech 9 der Schicht 5 überdeckt, so überdecken die Bleche 12 einer jeden Schicht 5, 6, 7, 8 in gleicher Weise die wellenförmig gebogenen Bleche 9 der jeweils darunterliegenden Schicht 6, 7, 8. Damit sind nun insgesamt auch alle Räume von Wellentälern 10 der wellenförmig gebogenen Bleche 9 der Schichten 5, 6, 7, 8 derart geschlossen, dass sie Fluidkanäle 14 bilden.

Gemäß Figur 1 sind in die Wellentäler 10 der wellenförmig gebogenen Bleche 9 von Kältemittel zu durchströmende Rohre 15 eingelegt. Damit ergibt sich eine Teilstrecke 17, bei der in sehr kompaktem Aufbau das von Kältemittel durchströmte Rohr 15 an seiner Oberfläche in direktem Kontakt mit einem Fluid des Fluidkanals 13 steht. In diesen Teilstrecken 17 ist vorteilhafterweise ein echter Gegenstrom-Wärmeübertrager realisiert. Ein Fluidkanal 14 steht je nach Betrachtungsweise im Gegenstrom oder Gleichstrom über das jeweilige Blech 9 thermisch in Kontakt mit dem Kältemittel der Rohre 15.

Über Biegungen 17 sind die Rohre als eine einstückige, mäandrierende Kühlmittelschlange 18 ausgebildet. Um im zusammengebauten Zustand eine derartige Kühlmittelschlange 18 jeweils in einem wellenförmig gebogenen Blech 9 zwischen einem abdeckendem Blech 12 unterbringen zu können, sind im Bereich der Biegungen 17 Aussparungen 19 in dem wellenförmig gebogenen Blech 9 vorgesehen. Die im Einsatz jeweils mit einem Fluid gleichsinnig durchfluteten Fluidkanäle 13, 14 sind über die durch die Aussparungen 19 entstehenden Räume hydraulisch parallel geschaltet.

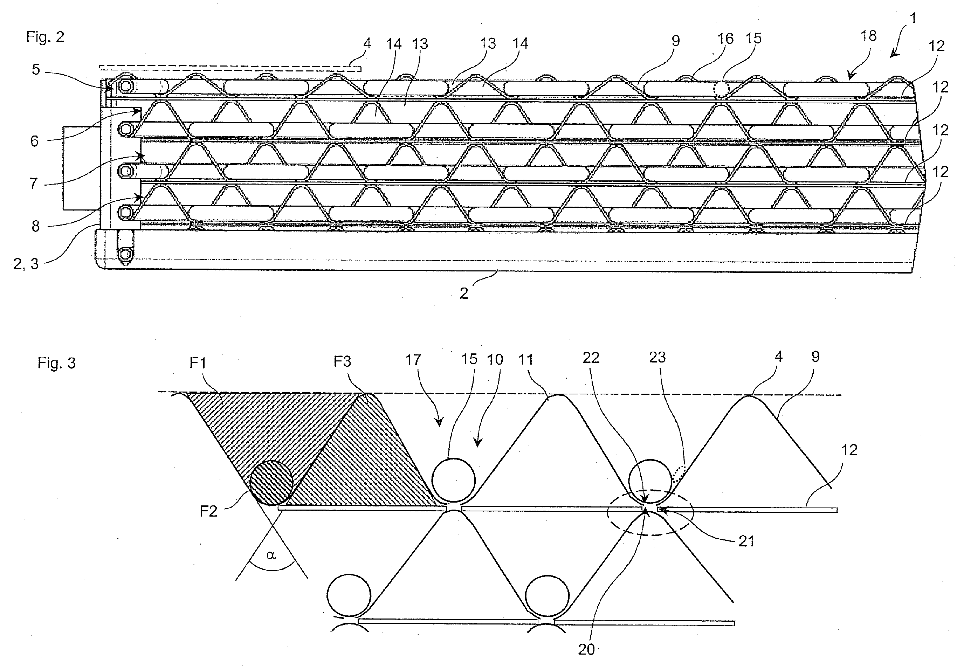

Figur 2 zeigt einen Ausschnitt x des Wärmeübertragers 1 von Figur 1 in einer vergrößerten Seitenansicht. Hierin ist nun deutlich zu erkennen, dass die Schicht 5 gegenüber den Schichten 6, 7, 8 bei gleichbleibender Periodenlänge der Wellenstruktur des Blechs 9 eine reduzierte Höhe aufweist. Die Dimensionierung und Formung der Kühlmittelschlange 18 bleibt von diesen Änderungen unberührt, so dass in allen Schichten 5, 6, 7, 8 auf benachbarte Schichten bezogen jeweils paarweise oder sogar insgesamt gleiche Kühlmittelschlangen 18 verwendet werden können.

Das Verhältnis der Querschnittsflächen F1 der Fluidkanäle 13, der Querschnittsflächen F3 der Fluidkanäle 14 und der Querschnittsfläche F2 des Rohres 15 ist in der Abbildung von Figur 3 anhand einer skizzierten Schnittdarstellung durch einen Wärmeübertrager 1 gemäß einer der vorhergehenden Figuren dargestellt. In der gewählten Darstellungsform von Figur 3 ergibt sich ein Verhältnis der Querschnittsflächen F1 : F2 von deutlich größer als 1 : 5. Hierbei bildet die Querschnittsfläche F1 ungefähr eine Dreiecksfläche mit einem Spitzenwinkel α von weniger als 90°.

Bedingt durch diese Flächenform und die parallel laufenden Ebene der Bleche 12 ergibt sich, dass die Flächen F1 und F3 gleich groß sind. Bei Abweichung von der V-Form hin in Richtung auf eine U- oder W-Form kann in einer nicht weiter dargestellten Ausführungsform der Erfindung das Verhältnis zwischen den Flächen F1 und F3 in einem weiten Bereich frei eingestellt werden. Diese Freiheit kann erforderlich sein, um beispielsweise Unterschiede in der Durchströmungsmenge der Fluidkanäle 13, 14 und/oder Unterschiede im Wärmeübergang der Fluidkanäle 13, 14 auszugleichen oder im Sinne einer Optimierung der Wärmeübertragerleistung abweichend einzustellen.

Ein wesentlicher fertigungstechnischer Vorteil einer erfindungsgemäßen Vorrichtung 1 ist ebenfalls in der Skizze von Figur 3 angedeutet: Die Rohre 15 einer Kühlmittelschlange 18 bilden zusammen mit dem wellenförmig gebogenen Blech 9 und dem darunterliegend angeordneten Blech 12 eine Schicht 5, 6, 7, 8. Derartige Schichten 5, 6, 7, 8 sind gemäß der Abbildung von Figur 2 fast beliebig übereinander stapelbar, so dass ein derart aufgebauter Wärmeübertrager sehr gut skalierbar ist.

Neben diesem Vorteil erlaubt der vorstehend beschriebene Aufbau jedoch auch ein sehr effizientes Verfahren zur mindestens teilweisen abdichtenden Verbindung der Elemente einer Schicht mit dem wellenförmig gebogenen Blech 9 einer darunter liegenden Schicht. Hierzu sind in dem hier V-förmigen Blech 9 in dem Bereich, in dem es mit dem Rohr 15 in oberflächlichem Kontakt steht, und in dem Trägerblech 12 in dem Bereich, in dem es mit dem V-förmigen Blech 9 sowie i.d.R. mit einem V-förmigen Blech 9 einer nachfolgenden Schicht in oberflächlichem Kontakt steht, Ausnehmungen 20 vorgesehen. Die Ausnehmungen 20 sind als Schlitze 21 oder Lochungen 22 mit Abmessungen ausgebildet, die im Zuge der gemeinsamen Verlötung im Wesentlichen geschlossen werden. Vorliegend werden Schlitze 21 in den Blechen 12 und Lochungen 22 in Form einer Perforation in den V-förmigen Wellenblechen 9 vorgesehen. Neben einer durchgehenden Verbindung der vorstehend genannten Elemente wird damit auch eine weitreichende innere Abdichtung der verschiedenen Fluidkanäle 13, 14 über die Schichten 5, 6, 7, 8 hinweg realisiert.

Dabei wird dieser eine Lötvorgang beim Stapeln der vorstehend genannten Elemente dadurch vorbereitet, dass Lötzinn 23 vorbestimmter Menge in Stabform im Bereich der Rohre 15 angeordnet wird. Im Rahmen eines Lötschritts, der nur eine gleichmäßige Erwärmung der gesamten Anordnung auf eine Temperatur jenseits des Schmelzpunktes des Lötzinns 23 umfasst und in einem Vakuumofen durchgeführt wird, wird das Lötzinn 23 dann soweit verflüssigt, dass es alle Elemente in dem gestrichelt eingefassten Bereich miteinander verbindet. Damit wird so in nur einem Schritt eine sichere und fluiddichte Verbindung der beteiligten Elemente über alle Schichten 5, 6, 7, 8 hinweg in dem in Figur 3 beispielhaft gestrichelt umrandeten Kontaktbereich hergestellt.

Das vorstehend beschriebene Verfahren setzt eine gewisse Maßhaltigkeit gerade bei dem im vorliegenden Beispielfall V-förmigen Blech 9 voraus. Um hier eine ausreichende Maßhaltigkeit sicherstellen zu können, wird das V-förmige Blech 9 mit periodischer Fortsetzung senkrecht zu einer späteren Strömungsrichtung durch abschnittsweises Pressen und/oder Tiefziehen eines zuvor im Wesentlichen ebenen Blechs hergestellt. Durch ein abschnittsweises Fortschreiten von Press- und/oder Tiefziehvorgängen kann ein Blech in einem bereits fertiggestellten Bereich fixiert bzw. festgehalten werden, wobei Verformungs- und Fließvorgänge in einem gerade bearbeiteten Bereich nicht behindert werden. Damit werden hinsichtlich der Maßhaltigkeit gute Ergebnisse erzielt, wobei zugleich ein Reißen des Blechs weitgehend ausgeschlossen werden kann. Die vorstehend im Zusammenhang mit einer abschließenden Verlötung der Einzelteile beschriebenen Ausnehmungen 22 in dem V-förmigen Blech 9 würden sich bei dem gerade beschriebenen Vorgang der Materialumformung störend als Risskeime bemerkbar machen. Daher werden die Ausnehmungen 22 an V-förmigen Blechen 9 durch Stanzen, Bohren und/oder Lasern vorzugsweise erst nach der beschriebenen Materialumformung hergestellt. Dabei werden die Ausnehmungen 22 an dem i.d.R. ebenen Trägerblech 12 vorzugsweise nach dem gleichen Verfahren hergestellt.

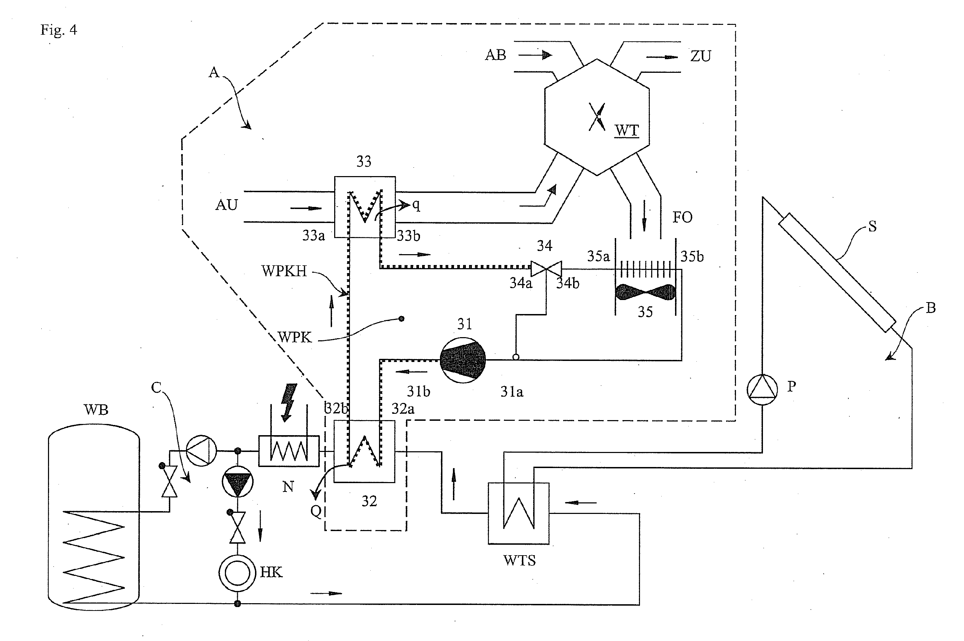

In der Abbildung von Figur 4 ist ein schematisches Schaltbild einer Ausführungsform der Erfindung dargestellt, wobei eine mit gestrichelter Linie umschlossene Lüftungsanlage A zusammen mit einem Solarwärme-Kreis B an eine Heizungs- und/oder Brauchwasseranlage C gekoppelt ist.

Soweit die Lüftungsanlage A einen Wärmeübertrager WT aufweist, der als Luft-Luft-Kreuzstrom-Wärmeübertrager oder Luft-Luft-Gegenstrom-Wärmeübertrager ausgebildet ist, kann über eine zeichnerisch nicht weiter dargestellte mechanische Lüftungsanlage ein Abluftstrom AB aus zu beheizenden Räumen an den Abluft-Eingang des ersten Wärmeübertragers WT geleitet werden. Nach der Übertragung von Wärmeenergie auf einen Zuluftstrom ZU wird der Abluftstrom AB als Fortluft FO weitergeleitet.

Die im Fortluftstrom FO noch enthaltene sensible Wärme wird in einem Wärmepumpenkreis WPK genutzt. Dazu umfasst dieser Wärmepumpenkreis WPK einen Verdichter 31 zum Verdichten eines gasförmigen Kältemittels, einen ersten Wärmeübertrager 32 und einen zweiten Wärmeübertrager 33, die beide als Gaskühler für das verdichtete Kältemittel und mithin zu dessen Verflüssigung dienen. Schließlich gelangt das flüssige Kältemittel über ein steuerbares Expansionsventil 34 zu einem Verdampfer 35. Hinter dem Verdampfer 35 schließt sich der Wärmepumpenkreis WPK, wobei der Fortluftstrom FO nach dem Durchlaufen des Verdampfers 35 dann endgültig an die Umgebung abgegeben wird. Der Wärmeübertrager 32 kann in vorteilhafter Weise als Heizkörper für die Erwärmung von Zuluft verwendet sein, wobei er im Zuluft- oder Außenluftstrom liegt.

Der Verdampfer 35 dient also dem weitgehenden Entziehen der noch im Fortluftstrom FO enthaltenen sensiblen Wärme. Er ist dazu so dimensioniert, dass das Kältemittel mindestens beim Eintritt in den nachgeschalteten Verdichter 31 in einem überkritischen Bereich betrieben wird. In vorteilhafter Weise wird das Kältemittel in einem Hochdruckbereich (WPKH) des Wärmepumpenkreises (WPK) zwischen dem Verdichter 31 und dem Expansionsventil 34 in einem überkritischen Zustand betrieben. Mit Kohlendioxid CO2 als Kältemittel ist eine Chemikalie mit guter Verfügbarkeit, hoher Umweltverträglichkeit und vergleichsweise geringem Gefahrenpotential verwendet.

Die von dem Fortluftstrom FO im Verdampfer 35 aufgenommene Wärme wird dann in zwei Stufen über den ersten Wärmeübertrager 32 und einen zweiten Wärmeübertrager 33 wieder abgegeben. Dem Wärmeübertrager 32 als ersten Verflüssiger ist in Strömungsrichtung des Kältemittels des Wärmepumpenkreises WPK der zweite Wärmeübertrager 33 nachgeschaltet, der in diesem Beispielfall als Lamellenrohr-Wärmeübertrager ausgebildet ist. Dieser zweite Wärmeübertrager 33 wird einerseits vom Kältemittel des Wärmepumpenkreises WPK und andererseits vom Außenluftstrom AU durchströmt, bevor der Außenluftstrom AU zur weiteren Erwärmung in den ersten Wärmeübertrager WT eintritt.

Das verflüssigte Kältemittel hat an einem Ausgang 32b des Verflüssigers 32 eine Temperatur in der Größenordnung von beispielsweise 30°C. Es wurde gefunden, dass bei niedrigen Umgebungstemperaturen, d.h. niedrigen Temperaturen des Außenluftstroms AU von insbesondere unter 0°C, die Gefahr besteht, dass der erste Wärmeübertrager WT bereift oder vereist und damit großteils seine Wirkung verliert. In diesem Fall einer Unterkühlung des Kältemittels ist der zweite Wärmeübertrager 33 dem Außenluft-Eingang des als Luft-Luft-Wärmeübertrager ausgebildeten ersten Wärmeübertragers WT vorgeschaltet, wobei das im Hochdruckbereich (WPKH) überkritische Kältemittel im ersten Wärmeübertrager 32 einen größeren Teil Q der Wärme auf eine erste Wärmesenke, die Heizungs- und/oder Brauchwasseranlage C, überträgt und ein weiterer Wärmeübertrager 33 einen kleineren Teil q der Wärme des Kältemittels auf niedrigem Temperaturniveau auf einen Außenluftstrom AU als zweite Wärmesenke überträgt, so dass das Einfrieren des anschließend von der Außenluft durchströmten Luft-Luft-Wärmeübertragers WT unterbunden wird. Durch die Abgabe einer bestimmten Wärmemenge q durch den zweiten Wärmeübertrager 33 wird der Außenluftstrom AU vorerwärmt, was einer Bereifung und/oder Vereisung des ersten Wärmeübertragers 1 entgegenwirkt. Gleichzeitig wird dabei das im Hochdruckbereich des (WPKH) befindliche Kältemittel des Wärmepumpenkreises (WPK) noch weiter abgekühlt. Dies ist für den Wärmepumpenbetrieb günstig, weil die Heizleistung ohne Erhöhung der elektrischen Leistungsaufnahme im Verdichter 1 gesteigert wird.

Der Solarwärme-Kreis B umfasst einen Sonnenkollektor S, eine Pumpe P und einen Wärmeübertrager WTS, der durch seine Dimensionierung an die in einem Solar-Kreis auftretenden Wärmemengen angepasst ist. Über den sog. Solar-Wärmeübertrager WTS wird in dem Sonnenkollektor S gewonnene Wärme in den Heizungs- und/oder Brauchwasseranlage C übertragen, der neben einer elektrischen Nacherwärmung N auch noch den Wärmeübertrager 32 des Wärmepumpenkreises WPK der Lüftungsanlage A als Wärmequelle umfasst. Zur Nutzung beispielsweise von Geothermie-Wärmequellen etc. können hier im Wärmekreis der Heizungs- und/oder Brauchwasseranlage C weitere Wärmeübertrager vorgesehen werden.

Die an den dargestellten drei Wärmeübertragern WTS,32,N eingespeiste Wärme kann nun wahlweise über Pumpen und steuerbare Ventile auf einen Heizkreis HK und einen Warmwasserkreis mit einem Warmwasserbehälter WB aufgeteilt werden. Der Heizkreis HK versorgt Radiatoren und/oder Fußbodenheizungen mit Heizwasser. Die über einen Wärmeübertrager in den Warmwasser-behälter WB eingeleitete Wärme kann gespeichert werden und über nicht weiter dargestellte zusätzliche Wärmeübertrager nach Bedarf zur Erwärmung oder wenigstens zur Vorerwärmung von Trinkwasser genutzt werden. Trinkwasser kann auch durch ein Umlaufsystem für Warmwasser auf einer voreingestellten Temperatur gehalten werden.

Analog zum Aufbau der vorstehend beschriebenen Lüftungsanlage A kann auch eine in der Figur 4 nicht dargestellte Abwärme-Rückgewinnung aus Abwasser bei Vorerwärmung von Frischwasser zusätzlich oder alternativ betrieben werden.

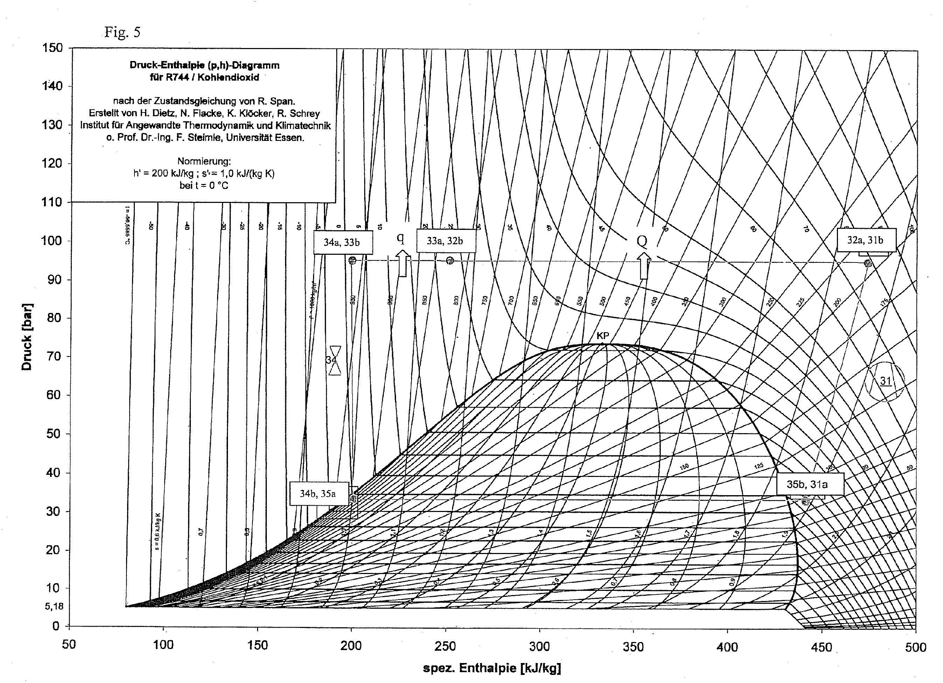

Figur 5 zeigt ein zu dem Wärmepumpenkreis von Figur 1 gehöriges Druck-Enthalpie-Diagramm für Kohlendioxid CO2 bzw. R744 als Kältemittel. Verdichter 31, erster Wärmeübertrager 32, zweiter Wärmeübertrager 33, steuerbares Expansionsventil 34 und Wärmeübertrager 36 sind als Elemente des Wärmepumpenkreises WPK durch ihre jeweiligen Eingänge a und Ausgänge b im Kreislauf innerhalb des p-h-Diagramms gekennzeichnet. Im p-h-Diagramm ist deutlich zu erkennen, dass sich der Arbeitspunkt im Übergang vom Ausgang 36b des Verdampfers 35 hin zum Eingang 31a des Verdichters 31 klar jenseits der Taulinie befindet.

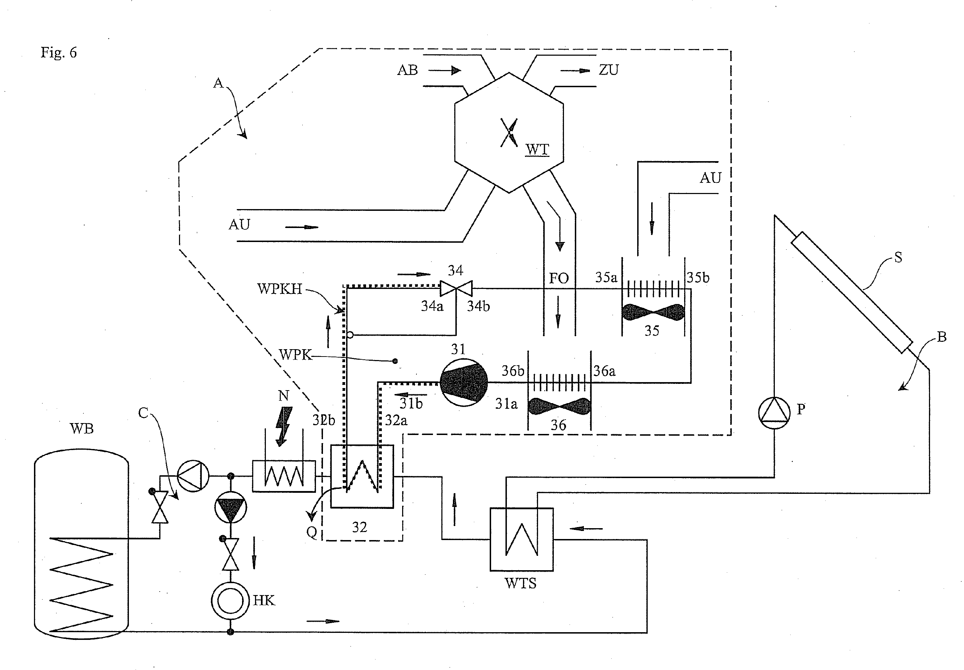

Figur 6 zeigt in schematischer Darstellung eine zweite Ausführungsform der Erfindung. Demgemäss werden nun Wärmequellen unterschiedlicher Eigenschaften ökonomisch optimal genutzt, indem zur Wärmeaufnahme zwei jeweils angepasste Wärmeübertrager als Verdampfer eingesetzt werden. In Flussrichtung des überkritischen Kältemittels ist dem mit Fortluft FO beaufschlagten Verdampfer 36 ein Verdampfer 35 vorgeschaltet. Der Verdampfer 35 nutzt ein kälteres Temperaturniveau zur zusätzlichen Aufnahme von Wärme, wozu dieser als Wärmeübertrager mit Außenluft AU beaufschlagt wird.

Zum Hintergrund für diese Besonderheit: Eine Sauggasüberhitzung oder eventuelle Nachverdampfung wird bei Wärmepumpen innerhalb des Kältemittelverdampfers gegen eine Wärmequelle oder durch einen inneren Wärmeübertrager gegen ein flüssiges Kältemittel realisiert. Als Nachteil bei der Überhitzung im Kältemittelverdampfer kann auftreten, dass bei einem effizienten Verdampfer unter Umständen keine zuverlässige Überhitzung des Kältemittels realisiert werden kann, wenn die Wärmequelle an sich ein recht niedriges Temperaturniveau hat.

Die Ausführung gemäß der vorliegenden Erfindung beinhaltet daher einen Wärmepumpenkreislauf in Verbindung mit einem Lüftungsgerät, wo das Kältemittel nach dem Wärmeübertrager 35 in einem weiteren Wärmeübertrager 36 gegen die Fortluft des Lüftungsgerätes überhitzt oder nachverdampft wird. Die Temperatur der Fortluft FO ist größer als die der Außenluft AU. Aufgrund der im Vergleich zur Außenluft AU höheren Feuchte der Fortluft FO ist in Verbindung mit ihrer höheren Temperatur der Energieinhalt der Fortluft FO größer als der Energieinhalt der Außenluft AU. Zudem ist wegen des vergleichbar kleinen Luftvolumenstroms der Fortluft FO und wegen der durch die hohen verfügbaren externen Pressung von mechanischen Wohnungslüftungsanlagen eine sehr kompakte Gestaltung des Wärmeübertragers 36 zur Überhitzung oder Nachverdampfung des Kältemittels möglich. Also ist nun in dem Wärmepumpenkreislauf hinter dem Wärmeübertrager 35 ein weiterer Wärmeübertrager 36 als Überhitzer angeordnet, in dem das Kältemittel CO₂ überhitzt oder nachverdampft wird. Die Überhitzung oder Nachverdampfung erfolgt gegen die Fortluft FO des ersten Wärmeübertragers WT, in dem die Zuluft ZU eines Gebäudes gegen die Abluft AB erwärmt wird.

In dem nach Figur 6 vorliegenden Fall einer Überhitzung des Kältemittels ist der zweite Wärmeübertrager 36 für eine Verdampfung und Überhitzung des Kältemittels ausgelegt, und ein betriebssicheres Nachverdampfen oder Überhitzen ist mit einer Wärmequelle sichergestellt, die stets ein höheres Temperaturniveau als die Wärmequelle des primären Verdampfers 35 hat. Damit kann das Kältemittel nun in dem zweiten Wärmeübertrager 36 als Überhitzer zum Teil verdampft und sicher überhitzt werden, es kann aber auch bereits in dem ersten Wärmeübertrager 35 als Verdampfer verdampft und zum Teil überhitzt werden. Figur 4 zeigt ein zu dem Wärmepumpenkreis gemäß Figur 3 gehöriges Druck-Enthalpie-Diagramm, in dem der entsprechende Übergabepunkt zwischen Ausgang 35b des zusätzlichen Wärmeübertragers 35 und dem Eingang 36a des Verdampfers bzw. Überhitzers 36 noch im Nassdampfgebiet dargestellt ist. Der Arbeitspunkt im Übergang vom Ausgang 36b des Wärmeübertragers 36 hin zum Eingang 31a des Verdichters 31 befindet sich wiederum klar jenseits der Taulinie.

Zur Verbesserung des thermodynamischen Wirkungsgrades des Kreisprozesses der CO₂-Wärmepumpe bzw. des Wärmepumpenkreises WPK wurde in der Ausführungsform dem Wärmeübertrager 32 als Gaskühler 31 der Wärmepumpe, in dem hier das Heizungswasser u.a. in der Heizungs- und Brauchwasseranlage C erwärmt wird, ein zweiter Wärmeübertrager 33 als zusätzlicher Gaskühler nachgeschaltet. Dieser dient dazu, die verbleibende Wärme des überkritischen CO2-Käitemittels auf die Außenluft AU zu übertragen.

Der zusätzliche Gaskühler 33 bewirkt neben einer signifikanten Verringerung der Gaskühler-Austrittstemperatur des Kältemittels gleichzeitig auch eine Vorerwärmung der Außenluft AU, so dass diese Temperaturen von 0°C oder mehr erreicht, so dass ein Einfrieren des Kreuz-Gegenstrom-Wärmeaustauschers vermieden wird. Dies führt neben einer unterbrechungsfreien Verfügbarkeit der Anlage bei CO2-Wärmepumpen- oder Kältekreisen zu einer deutlichen Erhöhung der Leistungszahl, weil sich die nutzbare Wärme- bzw. Kälteleistung erhöht, ohne dass dazu zusätzliche Verdichterleistung aufgewendet werden muss. Bei einem CO2-Wärmepumpenprozess mit -10°C Verdampfungstemperatur und einem Gaskühlerdruck von 80 bar kann so die Heizleistungszahl von 2,7 bei einer Gaskühleraustrittstemperatur von 30°C auf 3,2 bei einer Gaskühleraustrittstemperatur von 20°C verbessert werden.

Diese erstbeschriebene Vorrichtung kann jedoch gut mit einer Kältemittelnachverdampfung mittels Fortluft FO gemäß einer Ausführungsform der Erfindung kombiniert werden. In beiden Fällen ist eine Kombination aus Lüftungsgerät und Wärmepumpe vorgesehen. Bei der ersten Ausführungsform der Erfindung wird die Wärme des zweiten Gaskühlers bei niedrigem Temperaturniveau auf die vom Lüftungsgerät angesaugte Außenluft übertragen und damit die Leistungszahl des Wärmepumpenkreises erhöht; bei der zweiten Ausführungsform der Erfindung wird die verbleibende Energie der Fortluft des Lüftungsgerätes genutzt, um eine sichere Nachverdampfung des aus dem saugseitigen Sammler kommenden Kältemittels zu gewährleisten und damit einen regelungstechnisch stabilen Kältekreis und eine lange Verdichterlebensdauer zu ermöglichen.

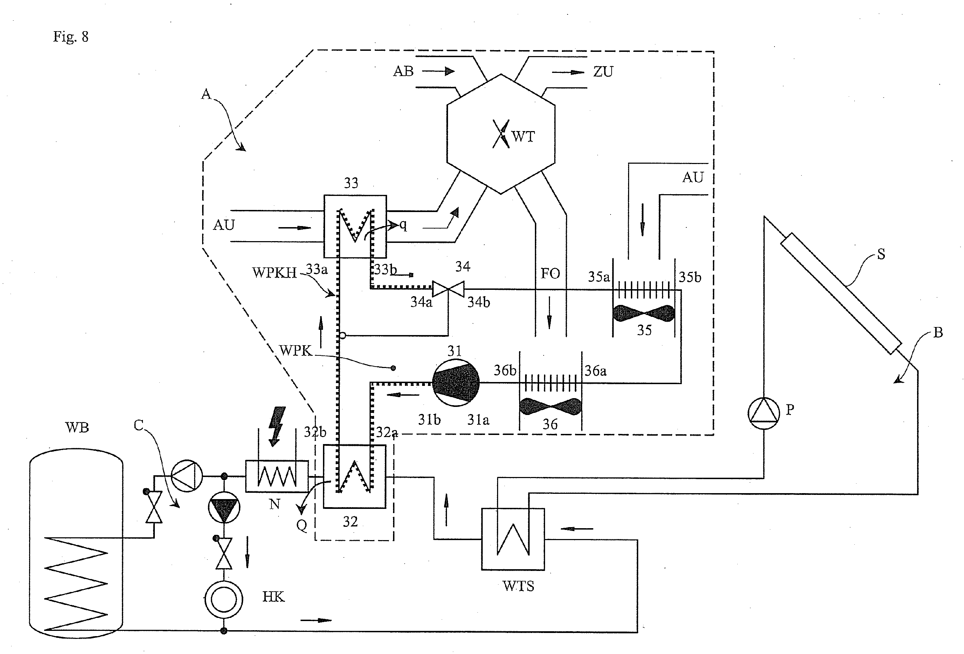

Diese Kombination ist als dritte Ausführungsform der Erfindung in Figur 8 als schematisches Schaltbild dargestellt.

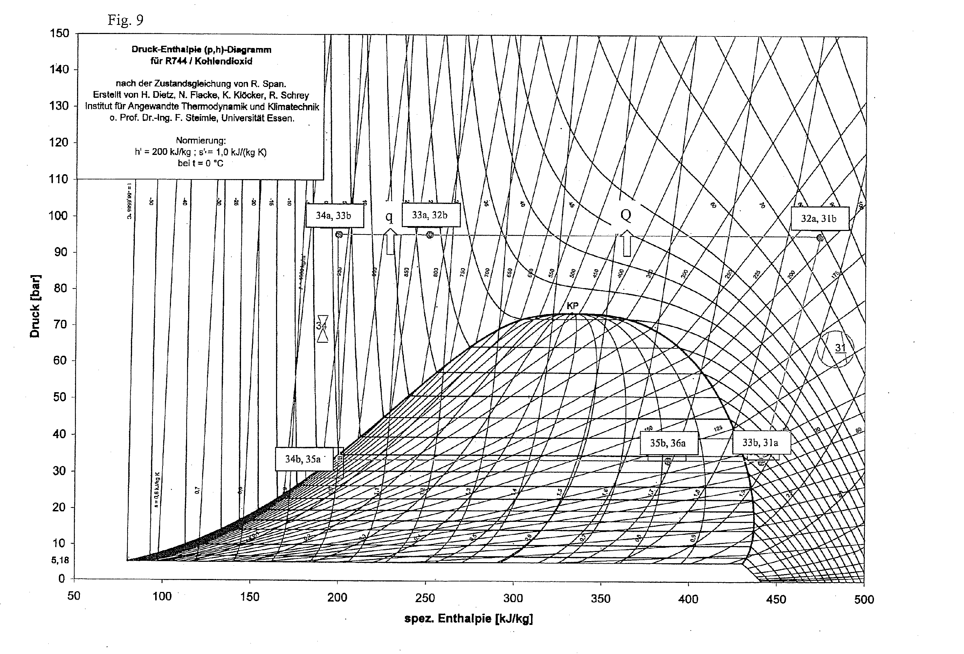

Figur 9 zeigt ein Druck-Enthalpie-Diagramm, das zu dem Wärmepumpenkreis von Figur 8 gehört. Hierin sind die vorstehend zu den ersten beiden Ausführungsformen beschriebenen Eigenschaften exakt übernommen worden.

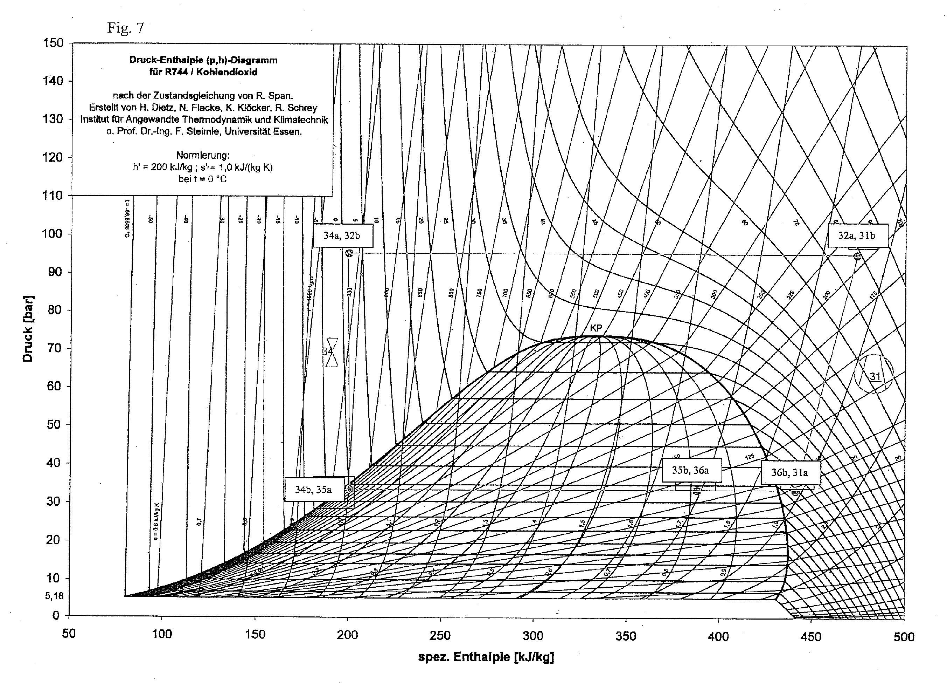

Der in den Figuren 1 bis 3 gezeigte Wärmeübertrager kann beispielsweise als Wärmeübertrager 32 gemäß den Figuren 4, 6 oder 8 eingesetzt werden. Somit stellen die Ausführungsformen gemäß den Figuren 4 bis 9 eine Einsatzmöglichkeit des Wärmeübertragers gemäß den Figuren 1 bis 3 dar.

Die Erfindung betrifft die folgenden Ausführungsformen:
Ausführungsform 1
   Wärmeübertrager mit einem Leitungssystem für ein Kältemittel, einem Leitungssystem für ein Fluid, die miteinander thermisch gekoppelt sind, einer Vielzahl von Teilstrecken, die hydraulisch jeweils miteinander parallel und/oder seriell verbunden sind, dadurch gekennzeichnet, dass in einer Teilstrecke (17) jeweils ein Fluidkanal (13) ein Blech (9) mit ungefähr U-, V- oder W-förmigem Querschnittsverlauf umfasst, das an den Enden der U-, V- oder W-Form durch ein Blech (12) geschlossen ist, wobei das Kältemittel in einem Rohr (15) parallel zur Längsachse des Fluidkanals (13) in dem Fluidkanal (13) angeordnet ist.
Ausführungsform 2
   Wärmeübertrager nach der vorhergehenden Ausführungsform, dadurch gekennzeichnet, dass das Verhältnis der Querschnittsflächen (F1) des Fluidkanals (13) und der Querschnittfläche (F2) des Rohres (15) dem Verhältnis der k-Faktoren des Kältemittels und des Fluids entspricht.
Ausführungsform 3
   Wärmeübertrager nach der vorhergehenden Ausführungsform, dadurch gekennzeichnet, dass das Verhältnis der Querschnittsflächen (F1) des Fluidkanals (12) und der Querschnittsfläche (F2) des Rohres (15) in einem Bereich von 2 : 1 bis 5 : 1 liegt, insbesondere 3 : 1 beträgt.
Ausführungsform 4
   Wärmeübertrager nach einer oder mehreren der vorhergehenden Ausführungsformen, dadurch gekennzeichnet, dass die Schenkel des ungefähr U-, V- oder W-förmigen Blechs (9) zueinander in einem Winkel (α) von ca. 55 bis 140°, insbesondere von ca. 67° stehen.
Ausführungsform 5
   Wärmeübertrager nach einer oder mehreren der vorhergehenden Ausführungsformen, dadurch gekennzeichnet, dass das Rohr (15) zwischen den Schenkeln des ungefähr U-, V- oder W-förmigen Blechs fixiert ist.
Ausführungsform 6
   Wärmeübertrager nach der vorhergehenden Ausführungsform, dadurch gekennzeichnet, dass das Rohr (15) an dem U-, V- oder W-förmigen Blech dadurch fixiert ist, dass es angedrückt, angelötet, angeschweißt und/oder angelasert ist.
Ausführungsform 7
   Wärmeübertrager nach einer oder mehreren der vorhergehenden Ausführungsformen 1 bis 4, dadurch gekennzeichnet, dass das Rohr (15) ungefähr im Schwerpunkt der durch die Schenkel des ungefähr U-, V- oder W-förmigen Blechs (9) aufgespannten Fläche angeordnet ist.
Ausführungsform 8
   Wärmeübertrager nach einer oder mehreren der vorhergehenden Ausführungsformen, dadurch gekennzeichnet, dass das Rohr (15) in dem ungefähr U-, V- oder W-förmigen Blech (9) liegt, wobei das ungefähr U-, V- oder W-förmige Blech (9) auf einem Trägerblech (12) angeordnet ist, das insbesondere im Wesentlichen die gleiche Flächenausdehnung wie das U-, V- oder W-förmige Blech (9) aufweist.
Ausführungsform 9
   Wärmeübertrager nach einer oder mehreren der vorhergehenden Ausführungsformen, dadurch gekennzeichnet, dass das U-, V- oder W-förmige Blech (9) senkrecht zu seiner Längsachse im Bereich eines Schenkels an ein weiteres U-, V- oder W-förmiges Blech (9) angrenzt, so dass sich insbesondere im Fall einer Mehrzahl von U-, V- oder W-förmigen Blechen (9) insgesamt eine Art von Wellblech ergibt, das von dem Fluid mäandernd durchfließbar ist.
Ausführungsform 10
   Wärmeübertrager nach einer oder mehreren der vorhergehenden Ausführungsformen, dadurch gekennzeichnet, dass ein Rohr (15) an mindestens einem Ende mit einem gleichartigen Rohr (15) verbunden ist, so dass sich insbesondere eine von dem Kältemittel mäandernd durchfließbare Anordnung in Form einer Kühlmittelschlag (18) ergibt.
Ausführungsform 11
   Wärmeübertrager nach einer oder mehreren der vorhergehenden Ausführungsformen, dadurch gekennzeichnet, dass in dem Wärmeübertrager (1) eine Anordnung aus Rohr (15), U-, V- oder W-förmigem Blech (9) und Trägerblech (12) als Schicht (5, 6, 7, 8) zusammengefasst und über einer anderen Schicht mit gleichartigen Bauteilen angeordnet ist, so dass das Trägerblech (12) der ersten Schicht das abdeckende Blech der zweiten Schicht bildet.
Ausführungsform 12
   Wärmeübertrager nach einer oder mehreren der vorhergehenden Ausführungsformen 8 bis 11, dadurch gekennzeichnet, dass das U-, V- oder W-förmigem Blech (9) in dem Bereich, in dem es mit dem Rohr (15) in oberflächlichem Kontakt steht, und das Trägerblech (12) in einem Bereich, in dem es mit dem U-, V- oder W-förmigen Blech (9) in oberflächlichem Kontakt steht, Ausnehmungen (20) zur Ermöglichung einer gemeinsamen Verlötung aufweisen.
Ausführungsform 13
   Wärmeübertrager nach der vorhergehenden Ausführungsform, dadurch gekennzeichnet, dass die Ausnehmungen (20) als Schlitze (21) und/oder Lochungen (22) mit Abmessungen ausgebildet sind, die im Zuge der gemeinsamen Verlötung im Wesentlichen geschlossen werden.
Ausführungsform 14
   Wärmeübertrager nach einer oder mehreren der vorhergehenden Ausführungsformen, dadurch gekennzeichnet, dass der Wärmeübertrager (1) als Gegenstrom-Wärmeübertrager ausgebildet ist.
Ausführungsform 15
   Wärmeübertrager nach einer oder mehreren der vorhergehenden Ausführungsformen, dadurch gekennzeichnet, dass das Kältemittel im überkritischen Bereich betriebenes Kohlendioxid ist.
Ausführungsform 16
   Wärmeübertrager nach einer oder mehreren der vorhergehenden Ausführungsformen, dadurch gekennzeichnet, dass das Fluid Wasser ist.
Ausführungsform 17
   Wärmeübertrager nach einer oder mehreren der vorhergehenden Ausführungsformen, dadurch gekennzeichnet, dass das Rohr (15), das U-, V- oder W-förmige Blech (9), das Trägerblech (12) und ein fluiddichtes Außengehäuse (2) aus Kupfer oder Edelstahl bestehen.
Ausführungsform 18
   Verfahren zur Herstellung eines Wärmeübertragers, in dem ein Leitungssystem für ein Kältemittel mit einem Leitungssystem für ein Fluid thermisch gekoppelt werden, dadurch gekennzeichnet, dass ein Rohr (15) jeweils in ein Tal (10) eines U-, V- oder W-förmigen Blechs (9) eingelegt und das U-, V- oder W-förmige Blech (9) auf ein Trägerblech (12) gelegt wird, wobei das U-, V- oder W-förmige Blech (9) mit Ausnehmungen (20) im Kontaktbereich mit dem Rohr (15) und das Trägerblech (12) mit Ausnehmungen (20) im Kontaktbereich mit dem U-, V- oder W-förmigen Blech (9) versehen wird Lötzinn (23) jeweils in ein Tal (10) eines U-, V- oder W-förmigen Blechs (9) eingelegt und die genannten Elemente miteinander verlötet werden.
Ausführungsform 19
   Verfahren nach der vorhergehenden Ausführungsform, dadurch gekennzeichnet, dass die genannten Elemente in einem einzigen Lötprozess miteinander verlötet werden.
Ausführungsform 20
   Verfahren nach einer der beiden vorhergehenden Ausführungsformen, dadurch gekennzeichnet, dass der Lötprozess in einem Vakuum-Ofen abläuft.
Ausführungsform 21
   Verfahren nach einer der vorhergehenden Ausführungsformen 18 bis 20, dadurch gekennzeichnet, dass die Ausnehmungen (20) in dem U-, V- oder W-förmige Blech (9) und dem Trägerblech (12) als Perforation, Lochung (22) und/oder abschnittsweise Schlitzung (21) hergestellt werden.
Ausführungsform 22
   Verfahren nach einer der vorhergehenden Ausführungsformen 18 bis 21, dadurch gekennzeichnet, dass die Ausnehmungen (20) in dem U-, V- oder W-förmige Blech (9) und dem Trägerblech (12) durch Stanzen, Bohren und/oder Lasern hergestellt werden.
Ausführungsform 23
   Verfahren nach einer der vorhergehenden Ausführungsformen 18 bis 22, dadurch gekennzeichnet, dass das U-, V- oder W-förmige Blech (9) mit periodischer Fortsetzung senkrecht zu einer späteren Strömungsrichtung durch abschnittsweises Pressen und/oder Tiefziehen eines Blechs hergestellt wird.
Ausführungsform 24
   Wärmepumpenkreis einer Lüftungsanlage mit einem im Hochdruckbereich überkritischen Kältemittel, der einen Wärmeübertrager aufweist, der von einem Außenluftstrom oder von einer Fortluft Wärme aufnimmt und auf das Kältemittel überträgt, dadurch gekennzeichnet, dass in dem Wärmepumpenkreis (WPK) ein Wärmeübertrager (35) oder ein Wärmeübertrager (35) und ein zweiter Wärmeübertrager (36) für die Überhitzung des zumindest teilweise verdampften Kältemittels vorgesehen ist, wobei der erste Wärmeübertrager (35), der wenigstens von Fortluft (FO) oder Außenluft (AU) durchströmt ist, in Strömungsrichtung des Kältemittels bei Heizbetrieb vor dem zweiten Wärmeübertrager (36) liegt, in dem von der Fortluft (FO) der Lüftungsanlage (A) Wärme auf das Kältemittel übertragen wird und/oder dass zusätzlich zu einem Wärmeübertrager (32) ein Wärmeübertrager (33) als Gaskühler im Außenluftstrom (AU) vor der Lüftungsanlage (A) angeordnet ist, bei dem Wärme vom in einem Hochdruckbereich (WPKH) überkritischen Kältemittel auf den Außenluftstrom (AU) übertragen wird.
Ausführungsform 25
   Wärmepumpenkreis nach Ausführungsform 24, dadurch gekennzeichnet, dass die Lüftungsanlage (A) einen Wärmeübertrager (WT) aufweist, der von einem Außenluftstrom (AU) beaufschlagt ist, wobei der Wärmeübertrager (WT) ein Luft-Luft-Wärmeübertrager ist, in dem ein Abluftstrom (AB) aus zu beheizenden Räumen Wärmeenergie auf den Außenluftstrom (AU) zur Ausbildung eines vorgewärmten Zuluftstroms (ZU) überträgt.
Ausführungsform 26
   Wärmepumpenkreis nach Ausführungsform 25, dadurch gekennzeichnet, dass der Wärmeübertrager (33) dem Außenluft-Eingang des als Luft-Luft-Wärmeübertrager ausgebildeten Wärmeübertragers (WT) vorgeschaltet ist, wobei mit dem Gaskühler (32) für das im Hochdruckbereich (WPKH) des Wärmepumpenkreises (WPK)überkritische Kältemittel einen größeren Teil (Q) der Wärme des Kältemittels auf eine erste Wärmesenke überträgt und der Wärmetauscher (33) einen kleineren Teil (q) der Wärme des überkritischen Kältemittels auf niedrigen Temperaturniveau auf einen Außenluftstrom (AU) überträgt, so dass das Einfrieren eines anschließend von der Außenluft (AU) durchströmten Luft-Luft-Wärmeübertragers (WT) unterbunden ist.
Ausführungsform 27
   Wärmepumpenkreis nach einer oder mehreren der Ausführungsformen 24 bis 26, dadurch gekennzeichnet, dass im Fall einer Überhitzung des Kältemittels der für die Erhitzung vorgesehene Wärmeübertrager (35) für eine Verdampfung und/oder eine teilweise Überhitzung des Kältemittels ausgelegt ist.
Ausführungsform 28
   Wärmepumpenkreis nach einer oder mehreren der Ausführungsformen 24 bis 27, dadurch gekennzeichnet, dass im Fall einer Überhitzung des Kältemittels der zweite Wärmeübertrager (36) für eine Verdampfung und Überhitzung des Kältemittels ausgelegt ist und ein betriebssicheres Nachverdampfen oder Überhitzen mit einer Wärmequelle sichergestellt ist, die stets ein höheres Temperaturniveau als die Wärmequelle des primären Verdampfers (35) hat.
Ausführungsform 29
   Wärmepumpenkreis nach einer oder mehreren der Ausführungsformen 24 bis 28, dadurch gekennzeichnet, dass eine mechanische Lüftungsanlage an den Abluft-Eingang des ersten Wärmeübertragers (WT) gekoppelt ist.
Ausführungsform 30
   Wärmepumpenkreis nach einer oder mehreren der Ausführungsformen 24 bis 29, dadurch gekennzeichnet, dass das Kältemittel ein Mitglied der Gruppe R134a, R290, R407C, R410A, R600a ist.
Ausführungsform 31
   Wärmepumpenkreis nach einer oder mehreren der Ausführungsformen 24 bis 30, dadurch gekennzeichnet, dass CO₂ bzw. R744 das Kältemittel ist.
Ausführungsform 32
   Wärmepumpenkreis nach einer oder mehreren der Ausführungsformen 24 bis 31, dadurch gekennzeichnet, dass der Wärmepumpenkreis (WPK) an eine Heizungs- und/oder Brauchwasseranlage (C) gekoppelt ist, insbesondere als eine von mehreren Wärmequellen.
Ausführungsform 33
   Wärmepumpenkreis nach einer der Ausführungsformen 24 bis 35, mit einem Wärmeübertrager gemäß einem der Ansprüche 1 bis 17.
Ausführungsform 34
   Verfahren zum Betreiben eines Wärmepumpenkreises einer Lüftungsanlage mit einem im Hochdruckbereich des Wärmepumpenkreises im überkritischen Zustand betriebenen Kältemittel, enthaltend die Verfahrensschritte, dass das Kältemittel zwischen einer Gaskühlung und einer Wärmeaufnahme einer Druckdifferenz zwischen ca. 40 und ca. 90 bar ausgesetzt ist, dass die Enthalpie des Kältemittels bei Hochdruck von über 70 bar im überkritischen Zustand getrennt hintereinander zunächst in einer ersten Gaskühlung (32a-32b) um ca. 150 bis ca. 300 kJ/kg fällt und in einer zweiten, auf die erste nachfolgende, Gaskühlung (33a-33b) um weniger als ca. 100 kJ/kg fällt und/oder bei einem Druck zwischen ca. 20 und ca. 60 bar bei einer ersten Wärmeaufnahme (5a-5b) die Enthalpie um ca. 150 bis ca. 250 kJ/kg ansteigt und bei einer nachfolgenden zweiten Wärmeaufnahme (6a-6b) des Kältemittels um weniger als ca. 100 kJ/Kg ansteigt.
Ausführungsform 35
   Verfahren nach Ausführungsform 34, dadurch gekennzeichnet, dass die erste Enthalpiesteigerung durch Wärmeaufnahme (5a-5b) aus der Außenluft (AU) erfolgt und die zweite Enthalpiesteigerung durch Wärmeaufnahme (36a-36b) einer Fortluft (FO) eines Raumes, die eine höhere Temperatur als sie Außenluft (Au) besitzt.
Ausführungsform 36
   Verfahren nach einer der vorhergehenden Ausführungsformen 34 oder 35, dadurch gekennzeichnet, dass das erste Fallen der Enthalpie durch Wärmeabgabe (32a-32b) an ein Heizungs-, Warmwasser- oder Lüftungssystem erfolgt und das zweite Fallen der Enthalpie durch Wärmeabgabe (33a-33b) an einen Außenluftstrom (AU) erfolgt.

### Bezugszeichenliste

- 1: Wärmeübertrager
- 2: fluiddichtes Außengehäuse
- 3: Schmalseite
- 4: Breitseitenfläche
- 5: Schicht
- 6: Schicht
- 7: Schicht
- 8: Schicht
- 9: wellenförmig gebogenes Blech aus Kupfer
- 10: Wellental
- 11: Wellenberg
- 12: Blech
- 13: Fluidkanal
- 14: Fluidkanal
- 15: Rohr
- 16: Biegung
- 17: Teilstrecke
- 18: Kühlmittelschlange
- 19: Aussparung
- 20: Ausnehmung
- 21: Schlitze
- 22: Lochung / Perforation
- 23: Lötzinn
- 24:
- 25:
- 26:

- F1: Querschnittsflächen der Fluidkanäle 13
- F2: Querschnittsfläche des Rohres 15
- F3: Querschnittsflächen der Fluidkanäle 14
- α: Spitzenwinkel

- A: Lüftungsanlage
- B: Solarwärme-Kreis
- C: Heizungs- und Brauchwasseranlage
- S: Solarkollektor
- P: Pumpe
- WTS: Solar-Wärmeübertrager
- N: elektrische Nacherwärmung
- HK: Heizkreis
- WB: Warmwasserbehälter
- Q: größere abgegebene Wärmemenge
- q: kleinere abgegebene Wärmemenge
- AB: Abluft
- AU: Außenluft
- FO: Fortluft
- ZU: Zuluft
- WT: erster Wärmeübertrager / Luft-Luft-Wärmeübertrager
- WPK: Wärmepumpenkreis / CO₂-Wärmepumpe
WPKH Hochdruckbereich Wärmepumpenkreis

Verdichter
- 31a: Eingang des Verdichters
- 31b: Ausgang des Verdichters

Gaskühler / Wärmeübertrager
- 32a: Eingang des Gaskühlers
- 32b: Ausgang des Gaskühlers

Gaskühler / Wärmeübertrager
- 33a: Eingang des Gaskühlers
- 33b: Ausgang des Gaskühlers

Expansionsventil
- 34a: Eingang des Expansionsventils
- 34b: Ausgang des Expansionsventils

Verdampfer / Wärmeübertrager
- 35a: Eingang des Verdampfers
- 35b: Ausgang des Verdampfers

Nachverdampfer / Wärmeübertrager
- 36a: Eingang des Nachverdampfers
- 36b: Ausgang des Nachverdampfers

## Patentansprüche

1. Wärmepumpenkreis einer Lüftungsanlage mit einem im Hochdruckbereich überkritischen Kältemittel, der einen Wärmeübertrager aufweist, der von einem Außenluftstrom oder von einer Fortluft Wärme aufnimmt und auf das Kältemittel überträgt, **dadurch gekennzeichnet, dass** in dem Wärmepumpenkreis (WPK) ein Wärmeübertrager (35) oder ein Wärmeübertrager (35) und ein zweiter Wärmeübertrager (36) für die Überhitzung des zumindest teilweise verdampften Kältemittels vorgesehen ist, wobei der erste Wärmeübertrager (35), der wenigstens von Fortluft (FO) oder Außenluft (AU) durchströmt ist, in Strömungsrichtung des Kältemittels bei Heizbetrieb vor dem zweiten Wärmeübertrager (36) liegt, in dem von der Fortluft (FO) der Lüftungsanlage (A) Wärme auf das Kältemittel übertragen wird und/oder dass zusätzlich zu einem Wärmeübertrager (32) ein Wärmeübertrager (33) als Gaskühler im Außenluftstrom (AU) vor der Lüftungsanlage (A) angeordnet ist, bei dem Wärme vom in einem Hochdruckbereich (WPKH) überkritischen Kältemittel auf den Außenluftstrom (AU) übertragen wird.

2. Wärmepumpenkreis nach Anspruch 1, **dadurch gekennzeichnet, dass** die Lüftungsanlage (A) einen Wärmeübertrager (WT) aufweist, der von einem Außenluftstrom (AU) beaufschlagt ist, wobei der Wärmeübertrager (WT) ein Luft-Luft-Wärmeübertrager ist, in dem ein Abluftstrom (AB) aus zu beheizenden Räumen Wärmeenergie auf den Außenluftstrom (AU) zur Ausbildung eines vorgewärmten Zuluftstroms (ZU) überträgt.

3. Wärmepumpenkreis nach Anspruch 2, **dadurch gekennzeichnet, dass** der Wärmeübertrager (33) dem Außenluft-Eingang des als Luft-Luft-Wärmeübertrager ausgebildeten Wärmeübertragers (WT) vorgeschaltet ist, wobei mit dem Gaskühler (32) für das im Hochdruckbereich (WPKH) des Wärmepumpenkreises (WPK)überkritische Kältemittel einen größeren Teil (Q) der Wärme des Kältemittels auf eine erste Wärmesenke überträgt und der Wärmetauscher (33) einen kleineren Teil (q) der Wärme des überkritischen Kältemittels auf niedrigen Temperaturniveau auf einen Außenluftstrom (AU) überträgt, so dass das Einfrieren eines anschließend von der Außenluft (AU) durchströmten Luft-Luft-Wärmeübertragers (WT) unterbunden ist.

4. Wärmepumpenkreis nach einem oder mehreren der Ansprüche 1 bis 3, **dadurch gekennzeichnet, dass** im Fall einer Überhitzung des Kältemittels der für die Erhitzung vorgesehene Wärmeübertrager (35) für eine Verdampfung und/oder eine teilweise Überhitzung des Kältemittels ausgelegt ist.

5. Wärmepumpenkreis nach einem oder mehreren der Ansprüche 1 bis 4, **dadurch gekennzeichnet, dass** im Fall einer Überhitzung des Kältemittels der zweite Wärmeübertrager (36) für eine Verdampfung und Überhitzung des Kältemittels ausgelegt ist und ein betriebssicheres Nachverdampfen oder Überhitzen mit einer Wärmequelle sichergestellt ist, die stets ein höheres Temperaturniveau als die Wärmequelle des primären Verdampfers (35) hat.

6. Wärmepumpenkreis nach einem oder mehreren der Ansprüche 1 bis 5, **dadurch gekennzeichnet, dass** eine mechanische Lüftungsanlage an den Abluft-Eingang des ersten Wärmeübertragers (WT) gekoppelt ist.

7. Wärmepumpenkreis nach einem oder mehreren der Ansprüche 1 bis 6, **dadurch gekennzeichnet, dass** das Kältemittel ein Mitglied der Gruppe R134a, R290, R407C, R410A, R600a ist.

8. Wärmepumpenkreis nach einem oder mehreren der Ansprüche 1 bis 7, **dadurch gekennzeichnet, dass** CO₂ bzw. R744 das Kältemittel ist.

9. Wärmepumpenkreis nach einem oder mehreren der Ansprüche 1 bis 8, **dadurch gekennzeichnet, dass** der Wärmepumpenkreis (WPK) an eine Heizungs- und/oder Brauchwasseranlage (C) gekoppelt ist, insbesondere als eine von mehreren Wärmequellen.

10. Wärmepumpenkreis nach einem der Ansprüche 1 bis 9, mit einem Wärmeübertrager mit einem Leitungssystem für ein Kältemittel, einem Leitungssystem für ein Fluid, die miteinander thermisch gekoppelt sind, einer Vielzahl von Teilstrecken, die hydraulisch jeweils miteinander parallel und/oder seriell verbunden sind, **dadurch gekennzeichnet, dass** in einer Teilstrecke (17) jeweils ein Fluidkanal (13) ein Blech (9) mit ungefähr U-, V-oder W-förmigem Querschnittsverlauf umfasst, das an den Enden der U-, V- oder W-Form durch ein Blech (12) geschlossen ist, wobei das Kältemittel in einem Rohr (15) parallel zur Längsachse des Fluidkanals (13) in dem Fluidkanal (13) angeordnet ist.

11. Verfahren zum Betreiben eines Wärmepumpenkreises einer Lüftungsanlage mit einem im Hochdruckbereich des Wärmepumpenkreises im überkritischen Zustand betriebenen Kältemittel, enthaltend die Verfahrensschritte, dass das Kältemittel zwischen einer Gaskühlung und einer Wärmeaufnahme einer Druckdifferenz zwischen ca. 40 und ca. 90 bar ausgesetzt ist, dass die Enthalpie des Kältemittels bei Hochdruck von über 70 bar im überkritischen Zustand getrennt hintereinander zunächst in einer ersten Gaskühlung (32a-32b) um ca. 150 bis ca. 300 kJ/kg fällt und in einer zweiten, auf die erste nachfolgende, Gaskühlung (33a-33b) um weniger als ca. 100 kJ/kg fällt und/oder bei einem Druck zwischen ca. 20 und ca. 60 bar bei einer ersten Wärmeaufnahme (5a-5b) die Enthalpie um ca. 150 bis ca. 250 kJ/kg ansteigt und bei einer nachfolgenden zweiten Wärmeaufnahme (6a-6b) des Kältemittels um weniger als ca. 100 kJ/Kg ansteigt.

12. Verfahren nach Anspruch 11, **dadurch gekennzeichnet, dass** die erste Enthalpiesteigerung durch Wärmeaufnahme (5a-5b) aus der Außenluft (AU) erfolgt und die zweite Enthalpiesteigerung durch Wärmeaufnahme (36a-36b) einer Fortluft (FO) eines Raumes, die eine höhere Temperatur als sie Außenluft (Au) besitzt.

13. Verfahren nach einem der vorhergehenden Ansprüche 11 oder 12, **dadurch gekennzeichnet, dass** das erste Fallen der Enthalpie durch Wärmeabgabe (32a-32b) an ein Heizungs-, Warmwasser- oder Lüftungssystem erfolgt und das zweite Fallen der Enthalpie durch Wärmeabgabe (33a-33b) an einen Außenluftstrom (AU) erfolgt.

14. Verfahren nach einem der Ansprüche 11, 12 oder 13, wobei der Wärmepumpenkreis einen Wärmeübertrager aufweist, in dem ein Leitungssystem für ein Kältemittel mit einem Leitungssystem für ein Fluid thermisch gekoppelt werden, wobei ein Rohr (15) jeweils in ein Tal (10) eines U-, V- oder W-förmigen Blechs (9) eingelegt und das U-, V-oder W-förmige Blech (9) auf ein Trägerblech (12) gelegt wird, wobei das U-, V- oder W-förmige Blech (9) mit Ausnehmungen (20) im Kontaktbereich mit dem Rohr (15) und das Trägerblech (12) mit Ausnehmungen (20) im Kontaktbereich mit dem U-, V- oder W-förmigen Blech (9) versehen wird, Lötzinn (23) jeweils in ein Tal (10) eines U-, V- oder W-förmigen Blechs (9) eingelegt und die genannten Elemente miteinander verlötet werden.
